# EUROPEAN PATENT SPECIFICATION

(11) **EP 3 176 853 B1**
(45) Date of publication and mention of the grant of the patent: **26.02.2025**
(21) Application number: 16205596.6
(22) Date of filing: 19.03.2013
(51) Int. Cl.: B25F 5/02, H01M 50/247, H01M 50/256, H01M 50/296, H01M 10/48

(54) **POWER ADAPTER FOR CORDLESS POWER TOOLS**
STROMADAPTER FÜR SCHNURLOSE ELEKTRISCHE WERKZEUGE
ADAPTATEUR ÉLECTRIQUE POUR DES OUTILS ÉLECTRIQUES SANS FIL

(30) Priority: 19.03.2012 WO PCT/EP2012/054847
(43) Date of publication of application: 07.06.2017
(62) Divisional of application: 13710418.8
(73) Proprietor: Husqvarna AB, 561 82 Huskvarna (SE)
(72) Inventor: Rief, Joachim, 89584 Ehingen (DE); Mönch, Corinna, 89231 Neu-Ulm (DE); Laible, Fritz, 89176 Asselfingen (DE); Rudolf, Peter, 89250 Senden (DE); Zeller, Tobias, 89233 Neu-Ulm (DE)

(56) References cited:
- CN-U- 202 016 044
- FR-A1- 2 623 345
- US-A- 5 680 026
- US-A- 6 087 815
- US-A1- 2002 125 857
- US-A1- 2003 090 162
- US-A1- 2008 012 526
- US-A1- 2012 048 588

## Description

The present invention relates to a power adapter for cordless power tools.

Cordless electrically operated power tools such as hedge trimmers, clearing saws, chain saws, brush cutters, trimmers, blowers, screw drivers, drills, hammer drills, nailers, staplers, polishing or grinding tools, need to be operated by batteries and provide a wide operating range since no electrical cables are provided.

Due to the increasing demand for elongated operating intervals for cordless power tools, larger batteries with higher capacities may be used. However, larger batteries having higher weights adversely affect comfort and ergonomy of operating the cordless tool, in particular power tool.

US 6087815A discloses a hand-held tool supplied with power from a portable power system. The portable power system includes a battery pack, a power cord, a connector connecting the cord with the battery pack, a converter unit at the other end of the cord from the battery pack, and an adapter which fits on the converter unit and which inserts into a battery cavity of the normally battery-powered hand tool.

Therefore, in particular it is one object of the invention to provide a possibility of operating cordless tools, in particular cordless power tools, in a comfortable and/or ergonomic way even if energy sources, in particular battery systems, with larger loading or charging capacities are used. Further, an energy source assembly, power tool assembly and energy source and power tool assembly shall be provided.

This object is achieved by the subject-matter of claim 1. Advantageous and preferred embodiments in particular result from the dependent claims.

A cordless power tool in particular shall be understood as a power tool, which, for ordinary operation, does not require a cable connection to a fixed or stationary electrical power source such as an energy generator or an electrical network or grid.

Rather, cordless power tools, in particular cordless power tools as rendered possible by the present invention, shall in particular be understood as power tools that can be operated in a stand-alone manner, in particular providing electric self-supply, such as for example with a passive energy source, such as a secondary battery or accumulator.

Note that a cordless power tool as rendered possible by the present invention, and in the broader sense, shall be understood as a stand-alone power tool or stand-alone power tool arrangement comprising battery packs either attached directly or indirectly thereto. Indirect connections may in particular comprise electrical connections to backpack battery packs and the like. It shall be stressed, that even in the event that the power tool is connected to a portable backpack energy source or the like via a cable, a respective power tool nevertheless is considered a cordless power tool. This in particular is the case as providing a backpack energy source does not require a fixed energy source or grid.

In embodiments, the power adapter comprises at least one balancing weight.

The balancing weight is adapted and configured for weight balancing the power tool in the indirect powering operation.

In other words, the balancing weight may be provided for acting as a counter weight for other operational components of the power tool in cases where no secondary battery of considerable weight is connected thereto. In particular, the counter weight may be configured so as to imitate the presence, in particular weight, of a conventional secondary battery, which hitherto is usual for cordless electrical power tools.

In particular, the counter weight may be adapted to provide the impression and to provide handling features comparable to the direct powering operation in which a secondary battery is provided and coupled to a respective interface of the power tool for powering the same. The balancing weight may provide advantageous weight distribution, and a favorable center of mass for the power tool. Also, in some cases the balancing weight may be provided for the reason to fulfill legal standards.

The proposed power adapter, either with or without balancing weight, may be used, for example, to connect to any type of cordless tool adapted to be powered by a network-independent energy source, i.e. off the line or by a battery energy source, such as a secondary battery, in particular a battery unit having enhanced loading capacity. The battery unit is a backpack energy source, i.e. a mobile energy source, in particular battery pack, specially adapted to be carried on the back of the user via at least one shoulder strap. Backpack energy sources are advantageous with respect to and can be designed for high wear comfort and ergonomics. However, also other types of energy sources, in particular battery packs, such as single shoulder strap type mobile battery packs, are conceivable.

Advantageously the power adapter comprises a housing adapted to accommodate, in particular on an outer and/or inner side, the balancing weight in the indirect powering operation. Furthermore, the power adapter may comprise a fixture unit into or onto which the balancing weight is fixed.

In an embodiment the fixture unit comprises a first fixture sub-unit and a second fixture sub-unit which are or can be connected by means of fastening elements to form the fixing unit. At least one balancing weight is now fixed to the first fixture sub-unit and/or the to the second fixture sub-unit before connection with the other sub-unit, preferably into a receiving space enclosed by a side wall of the sub-unit and/or is arranged in an inner space between the first fixture sub-unit and the second fixture sub-unit.

The housing is adapted to removably, in particular slidably, accommodate therein and/or thereon the fixture unit with the balancing weight.

In embodiments, the housing may comprise a base section and a cap or dome shaped cover. The base section and cover may be adapted to be combined and/or connected with each other to establish a casing, in particular an essentially closed housing, for accommodating therein in particular the balancing weight and other components of the power adapter.

In more general terms, the casing may provide an inner space for accommodating therein electronics, cables, in particular the balancing weight and/or other elements of the power adapter.

It is preferred, that the balancing weight is mounted to the base. Here, in general any type of mounting connections may be used, in particular clamping, screwing, snapping and the like.

Using the base section as a mounting base for the balancing weight may provide advantages for mounting the overall power adapter. In particular, the base section may be used and adapted for mounting or preassembling all the essential components of the adapter, and thereafter, the base section may be coupled to the cover to finally enclose all essential elements preassembled to the base.

In further embodiments, the base section comprises a recess adapted to accommodate a printed circuit board or similar control electronics, in particular for adequately controlling operation of the power adapter and power tool.

The power adapter may further comprise a support plate adapted to support the balancing weight while at the same time bridging the recess. The support plate is adequate for avoiding or preventing the balancing weight to exert mechanical loads to the control electronics, in particular printed circuit board.

The support plate is preferably adapted to bridge the recess in that flanges or webs are supported laterally adjacent to the recess, in particular on or at respective ribs. The flanges or webs may be implemented with or at the support plate or with or at the base section.

It shall be noted, that the control electronics, preferably a printed circuit board, which preferably is arranged below the balancing weight, optionally separated therefrom by the support plate, may be potted within the base section.

In embodiments, the power adapter may comprise a retaining bracket adapted and configured for bracket or clamp fastening the balancing weight to or against the base section.

Using a mounting or fastening bracket may be advantageous in view of assembly efficiency. The bracket may be U-shaped and/or pot-shaped and may in particular provide a rectangular clamping volume for clamping rectangular balancing weights.

It shall be noted that the clamping volume may be of any other shape. The balancing weight, by the way, may be any object or body suitable for being attached to the base section, in particular any metallic object of standardized shape having sufficient or adequate shape and corrosion resistance and other relevant characteristics.

In embodiments, the bracket comprises support sections or jibs, preferably protruding from the retaining bracket, preferably in a lateral direction. The support sections may be adapted to support the support bracket and balancing weight against at least one inner wall of the housing, in particular cover.

The support sections are advantageous for adequately fixing and supporting the balancing weight within the housing, in particular for protecting fastening elements and fixings against high impact loads.

The support sections may in addition be used and configured as cable support bars, which in particular shall mean that the support bars may be used for cable routing functions within the housing.

In further embodiments, the retaining bracket may comprise an integrated cable clamp section configured to clamp an electric supply cable of the power adapter, i.e. to be used for cable routing within the housing. Here, a high level of integration can be obtained, which may provide advantages during assembly. Further, as the bracket is adapted for retaining the balancing weight and therefore is comparatively robust, cables, such as supply cables, can be safely fixed.

In embodiments, the base section comprises a cable bushing. A cable bushing in particular shall mean a type of opening allowing a cable, in particular an electric supply cable, to be guided through the base section to the inner of the housing.

At the outer side, i.e. at the side external to the housing interior, the bushing may be implemented as a cone or funnel shaped deepening. Such a cone or funnel shaped deepening may comprise bended walls, in particular convex walls, adapted to allow smooth bending of the cable within the bushing, whilst avoiding sharp bends of the cable.

The cone or funnel, i.e. deepening, may be of rotational symmetric, i.e. isotropic, design. However, the cone or funnel may also be implemented in an anisotropic design, in which walls of the cone or funnel show different bending radii and ascent angles with respect to different bending directions.

In a view from the outside of the housing, the deepening comprises widening walls, which in particular shall mean that the axial cross section of the deepening gradually widens or increases towards the outside of the housing.

In an embodiment the power adapter comprises in or for a direct powering operation, instead of the at least one balancing weight, at least one battery for powering the power tool, wherein the weight of the battery is used for balancing the power tool. The power adapter in these cases may be adapted to the power tool, and the power tool then implements a self-powered device.

In particular, the power adapter is adapted to accommodate balancing weights of different mass in the indirect powering operation, which different masses are preferably adapted to different battery masses in the direct powering operation. The balancing weight in particular may be from steel and/or aluminum, and in particular any standard sized element or product suitable to be accommodated and/or arranged and/or fixed to the power adapter, in particular an inner interface of the power adapter, preferably housing.

In a further embodiment the power adapter comprises a slewable cable outlet for an electrical cable. The cable in particular may be used for connecting the power adapter to and with the energy source, in particular mobile energy source, in particular battery pack. Providing slewable cable outlets and/or connections adapted to connect cables to the power adapter in a slewable manner, greatly improves freedom of operation of the power tool, in particular as manual rotations or movements of the power tool can be balanced by a slewable cable outlet provided at the housing. In particular in operation, one advantage is that the cable may always be brought best operational position, or position to work.

In a preferred further embodiment the power adapter further comprises a display unit adapted to display a charging condition and/or other parameter such as temperature of the energy source at least in the electrically connected state. Note, that if the power connector itself comprises an additional battery, the display unit may also be used to display the charging state of the additional battery or battery unit. Displaying the charging state of the energy source at the power tool, in particular power adapter is advantageous, as such display is easily accessible and/or visible to a user operating with the power tool. In particular, if the energy source is a backpack energy source, checking the charging or loading state of the backpack energy source does not require removing the backpack energy source from the back.

Therefore, it is possible, that the power adapter itself may comprise batteries, such as conventional battery packs to be attached to the power tool. These batteries may in particular be used as intermediate storage means, charged by an external mobile energy source, such as a backpack energy battery pack.

However, it is also conceivable, and it is preferred that the power adapter does not contain any batteries or accumulators. In this case, the function of the power adapter is reduced to a simple connector without any charging functions.

The housing of the power adapter is preferably designed such that it complies with the design and dimensions of a respective conventional battery pack, in particular rechargeable battery pack, of the power tool. Here, the user of the power tool will not be confronted and will not have to customize to different designs. As in one configuration, such a housing may not contain any battery units, such a power adapter may also be called a "dummy battery".

The power adapter may have the same outside geometry and interfaces as conventional batteries used with the power tools. Note that using the proposed power tool does in general not require any mechanical and/or electrical adaptations of respective power tools. Conventional battery packs and the proposed power connector preferably are fully compatible.

The balance weight thus can be used and preferably is adapted such that an optimal center of gravity is obtained with the power tool.

The fixture unit may be adapted to comprise recesses or receiving spaces enclosed by side walls for accommodating therein one or more balance weight bodies. In particular the fixture unit may be adapted to clip or plug a balance weight body thereto.

In a further embodiment, the housing and/or fixture unit is/are adapted to accommodate one or several, i.e. at least one, balancing weight of the same or of different weight. If single balance weights are used, the power adapter will correspondingly have respective different weights. It is, however, also possible, that several different balance weights can be accommodated, which in particular means that the overall weight of the power adapter can be tuned, in particular fine-tuned, in particular in accordance with the weight distribution of the power tool to be used.

In cases, in which the housing is not fully filled with the balance weight or balance weight units, the housing has free spaces which may contribute to a more efficient cooling of the power tool, in particular if cooling is provided via the housing.

However, the balance weight is of great advantage, as the ordinary and usual weight distribution prevailing with conventional battery packs attached to the power tool, can be obtained, in particular simulated. It shall be noted, that the user in most of the cases is used to conventional weight distributions, and often, the weight distribution of the power tool is adapted under consideration of the weight of the battery pack.

The balancing weight or balancing weights themselves may be accommodated slidably within or on the housing. This may contribute to easily removing/exchanging the balance weights, in particular to adapt to different weight distribution requirements.

The power adapter may be connected, in particular fixedly or removably connected, to or with a cable connected to the energy source.

The power adapter, in particular the housing, is adapted to be coupled to a charging device, adapted to charge the energy source, in particular mobile energy source, such as a backpack energy source. In this way, the benefit of the power adapter is two-fold. On the one hand, the power adapter may be used to supply a power tool with energy of an external, in particular mobile energy source, while simulating battery-pack type conditions. On the other hand, the power adapter may be plugged from the power tool and, without any further actions, be plugged into the charging device. Here, time-saving operations may be obtained, in particular if interfaces of the power adapter, power tool and charging device are standardized.

The display may be any type of display, in particular 7-segment displays, digital displays, LED-displays and the like. The advantages of a LED 7-Segment-indication are the bright display, good visibility under working conditions, stable display in a wide temperature range and in particular the UV-stability.

Advantages of the proposed power adapter in particular are as follows. The proposed power adapter allows to use bigger portable battery-packs, in particular backpack batteries. In particular, the power adapter opens the possibility to use such a backpack battery for a variety of applications, in particular handheld power equipment, i.e. power tools, or handheld power tools. Additionally, different types of battery-packs can be used in the same application, in particular handheld power equipment. For example, the handheld power equipment may have an integrated battery-pack (10S2P-type). Since the dummy-battery has the same size, in particular outside geometry, and has the same interfaces, i.e. interface geometry (like that of 10S2P-type), the backpack battery can be used for respective handheld power equipment, too, leading to elongated operational times.

The power adapter according to the invention can be used with or within any electrically operated handheld devices, in particular within power tools such as hedge trimmers, clearing saws, chain saws, brush cutters, trimmers, blowers, screw drivers, drills, hammer drills, nailers, staplers, polishing or grinding tools, etc.

Preferred embodiments will now be described in connection with the annexed figures, in which:
- FIG 1: shows a perspective and partially broken-up view of a power adapter;
- FIG 2: shows a fixture unit of the power adapter of FIG 1;
- FIG 3: shows a fixture sub-unit of the fixture unit FIG 2 with a balancing weight in a partially sectioned view;
- FIG 4: shows a perspective view of the power adapter;
- FIG 5: shows a front view of the power adapter;
- FIG 6: shows a system comprising a power tool, a backpack battery pack assembly and a power adapter according to the invention;
- FIG 7: shows an exploded view of a further embodiment of the power adapter according to the invention;
- FIG. 8: shows a base section of the power adapter according to FIG. 7
- FIG. 9: shows the base section with a printed circuit board attached thereto;
- FIG. 10: shows the base section together with a support plate adapted to support the balancing weight;
- FIG. 11: shows a balancing weight arranged on the support plate;
- FIG. 12: shows a bracket mounted to the base section and fixing the balancing weight;
- FIG. 13: shows the power adapter in a preassembled state;
- FIG. 14: shows the power adapter in an advanced preassembled state;
- FIG. 15: shows the power adapter in an exploded view prior to assembly,
- FIG. 16: shows the power adapter in the assembled state and
- FIG. 17: shows a different perspective view of the power adapter in FIG. 16.

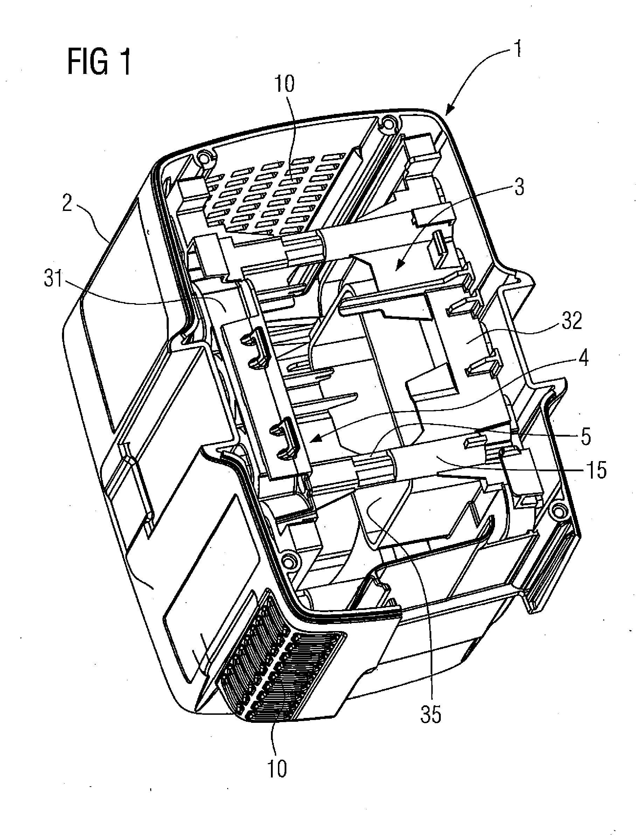

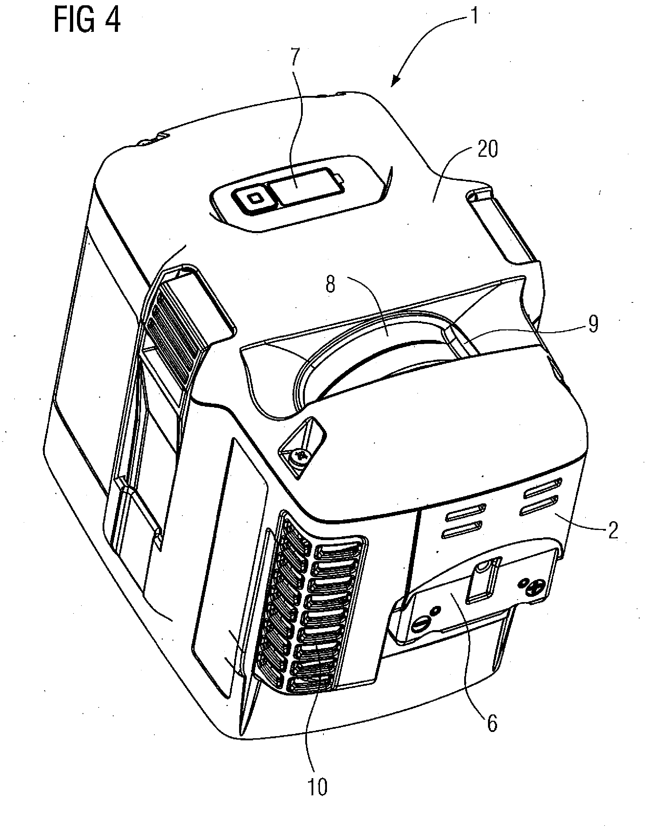

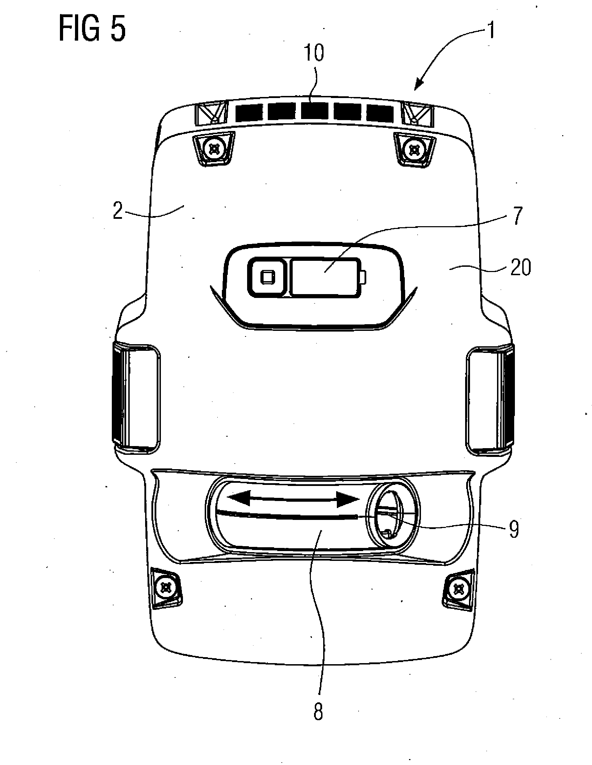

FIG 1 shows a perspective and partially broken up view of a power adapter 1. The power adapter 1 is to be inserted into a cordless hand-held power tool (not shown) and electrically and mechanically coupled to the cordless power tool for electrical supply of the power tool. The power adapter 1 comprises an adapter housing 2 in which a fixture unit (or: insert) 3 is accommodated, in particular inserted from above and slidably placed and/or removed from the housing 2. When the fixture unit 3 is properly mounted inside the adapter housing 2, the housing 2 is closed from above by a housing lid 20 which is fixed to the main part of the housing 2, e.g. by means of screws as shown in FIG 4 and 5.

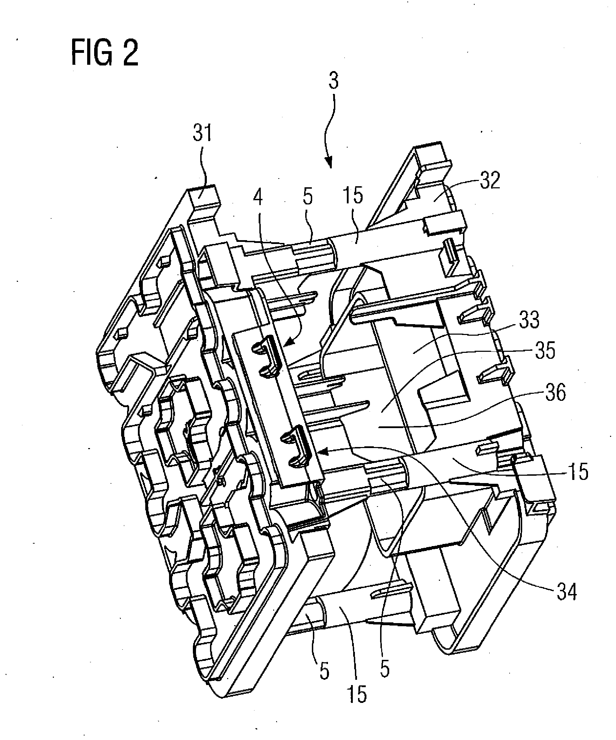

The fixture unit 3 without or outside of the adapter housing 2 is shown in FIG 2. Basically the fixture unit 3 comprises two halves or two fixture sub-units 31 and 32, each preferably having a plate-like base structure and a number, in particular four, of fastening elements 5 and 15 respectively by which fastening elements 5 and 15 the fixture sub-units 31 and 32 are fastened to each other, in particular by snapping or shape-locking or also screws. In the assembled or fastened state the two fixture sub-units 31 and 32 and the fastening elements 5 and 15 form a box-like or framelike fixture unit 3 and enclose an inner space 36 of the fixture unit 3.

The power adapter 1 comprises a contact and coupling electrical interface 6 adapted to be coupled to a respective counter interface of a cordless power tool (not shown).

In the inner space 36 of the fixture unit 3 it is, in a direct powering operation, possible to arrange battery cells (not shown) to electrically power the power tool directly from the power adapter 1 through the electrical interface 6 of the power adapter 1 being electrically coupled with a corresponding interface (not shown) of the power tool when the power adapter 1 is mounted in the power tool.

In order to insert or replace batteries the fixture unit 3 is dismounted from the housing 2 and the two fixture sub-units 31 and 32 are disassembled so that the batteries or new batteries can be mounted in between the fixture sub-units 31 and 32 or first in one of them. For this purpose a receiving space 35 (or 34) is provided at one or both of the fixture sub-units 31 and 32 being formed by a surrounding side wall 33 (or 37 [not indicated in the figures]), so that the batteries are inserted into the receiving space 35 (or 34) and held by the side wall 33 (or 37). The fixture sub-units 31 and 32 can be re-assembled and fixed by means of the fastening elements 5 and 15 again. Preferably, both side walls 33 and 37 of the receiving spaces 35 and 37 can hold or support the batteries in the power adapter 1 and are, for this purpose, opposing each other when the two fixture sub-units 31 and 32 are mounted to form the fixture unit 3.

However, when external batteries such as backpack battery assemblies to be carried on the back of the user of the power tool are used for electric supply of the power tool the power adapter 1 does not need to comprise batteries by itself. Rather, the power adapter 1 in this case is connected to the external batteries by means of a cable 9 on one hand and by its electrical interface 6 to the power tool 1 on the other hand. In this indirect powering operation case the power adapter 1 has only the passive function of electrically connecting the power tool with the external batteries, in particular backpack batteries. For the user it is somewhat like a dummy battery.

Now, the mass distribution and weight of a power tool is usually balanced for an optimum use and for this balancing the considerable weight of the batteries inside the power tool is taken into account.

However, in the indirect powering operation the power adapter 1 has no batteries and thus lacks the weight it has in the direct powering operation. This can lead to an unpleasant and different behaviour of the power tool during indirect powering operation as compared to direct powering operation.

To compensate this disadvantage a counter-weight or balancing weight 4 is provided in the power adapter 1 to reach at least approximately the same weight and balance of the power tool as if batteries were present. So, preferably for each power tool and battery set a corresponding set of balancing weights can be provided.

Preferably, the balancing weight 4 is arranged in the same region of the power adapter 2, i.e. here the inner space 36 of the fixture unit 3, where in the direct powering operation the batteries would be placed so as to emulate or produce the same balancing behaviour as if the batteries were present in the same place. In this case the balancing weight 4 can have basically the same mass as the (missing, replaced) batteries.

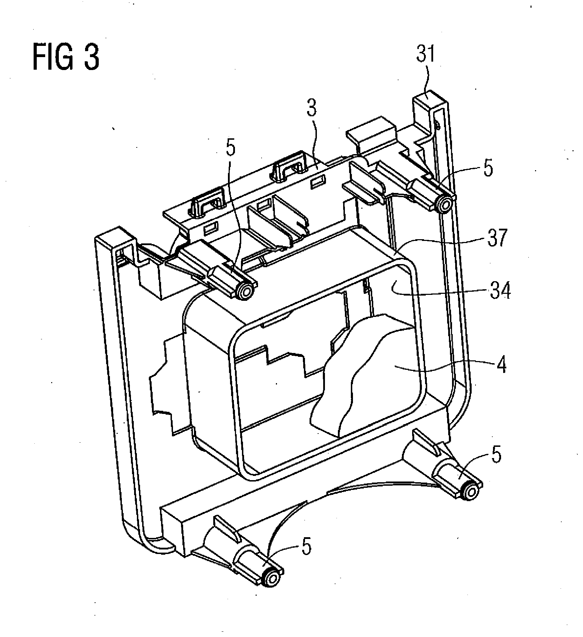

A preferred embodiment of how to incorporate the balancing weight 4 in the power adapter 1 is shown in FIG 3. Here, the balancing weight 4 which is shown only partly in a partially sectioned view, is received within the receiving space 34 surrounded by the side wall 37 and the base plate at the bottom of the first fixture sub-unit 31. For instance the balancing weight 4 can be a mineral body such as concrete or any other material such as metal or a compound material of metal and mineral or plastic or resin material which is heavy enough to reach the weight of the missing batteries. The weight 4 can be produced in situ into the receiving space 34 for instance poured into it or produced separately and then fixed into the receiving space 34 for instance by press-fitting or shape-locking or glueing or any other suitable fastening means. By means of the density and the size of the weight 4 the weight of the missing batteries in the power adapter 1 can be compensated.

This embodiment has the big advantage that only the first fixture sub-unit 31 has to be changed or replaced when the power adapter 1 is to be used in indirect powering operation instead of direct powering operation. The second fixture sub-unit 32 and all other components of the power adapter 1 as well as its dimensions and mechanical interfaces and electrical interface 6 to the power tool can basically stay the same.

In an alternative embodiment both fixture sub-units 31 and 32 have a balancing weight 4 and, thus, are both replaced in the case of direct powering operation or, in other words, the whole fixation unit 3 is replaced by a fixation unit having batteries instead.

Balance weights 4 of different types, in particular different weight can be attached to the fixture unit 3. Preferably, the fixture unit 3 and balancing weight 4 of different types are designed such that the outer geometry of the fixture unit 3 with the balancing weight 4, is independent from the type of balancing weight 4, and can in any case be inserted into the housing 2.

Providing the balancing weight 4, in particular with the fixture unit 3, has the advantage that the weight of the power adapter 1, as such being clearly lighter than conventional NiMH or Li-Ion accumulator packs, can be adapted to match, in particular approximately match, the weight of the conventional battery packs. This in turn has the advantage that a favorable balance of weight can be obtained, which is or will be familiar to a user experienced in operating battery-pack driven tools. The power adapter 1 therefore simulates the presence of a conventional battery pack.

However, as the power adapter 1 can be connected to a remote battery pack, such as a backpack battery pack, as will be described further below, a battery pack of comparatively high load capacity can be used and the overall operational time can be raised.

As shown in FIG 4 and 5 the power adapter 1 also comprises a display unit 7. The display unit 7 is adapted and attached in such a way that, in an indirect powering operation, the loading or charge status and/or temperature of a remote, movable energy source, such as a backpack battery pack, can be displayed and observed by a user during operation of the power tool. Such a display unit 7 is of particular advantage for backpack battery packs, as the loading status of the battery pack on the back of the user in this way can be easily checked during operation of a tool connected to the energy source and power adapter 1. Signals for controlling the display unit may be outputted from an electronic controller or the like of the energy source. Of course it is also possible that the display unit 7 shows the charge status and/or temperature of batteries inside the power adapter 1 in a direct powering operation, in particular when the first fixture sub-unit 31 with the weight 4 is replaced by a sub-unit adapted for batteries.

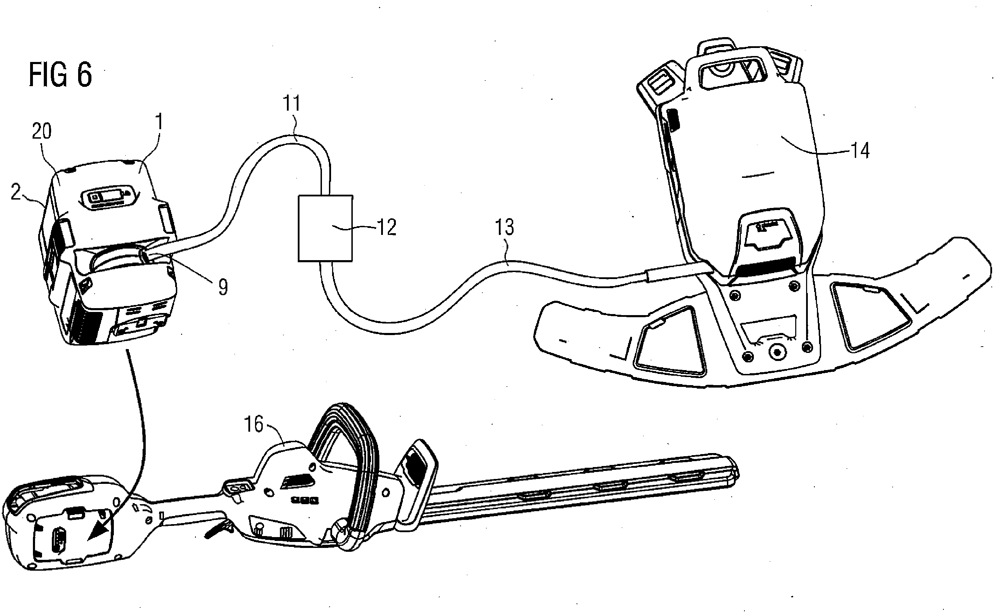

Furthermore, the power adapter 1 may comprise a slewable cable outlet 8. The slewable cable outlet 8 has an outlet opening 9. The outlet opening 9 is adapted to guide through an electric cable (shown in FIG 6 only) for connecting the power adapter 1, in particular electrical contacts of the coupling interface of the power adapter 1, to a remote energy source, such as a backpack battery pack.

The slewable cable outlet 8 may comprise or be constituted by a slewable member attached and mounted to the housing 2 to be slewable as indicated by the double arrow in FIG 5. In FIG 5, the slewable member is slewable in a horizontal plane. However, it is also or in the alternative possible to implement the slewable member to be slewable in a vertical plane. Such a slewable member will greatly ease operation of a tool or device connected to the power adapter 1 since the cable has a slewing range of up to 180° in a rotational movement. Of course also a spherical movement is possible, i.e. a rotation about two orthogonal axes.

Also the housing 2 comprises air vents 10 which allow a flow of air through the housing 2 which is not completely, in particular only slightly, filled. As can be seen, despite of the balance weight 4 and fixture unit 3 accommodated in the housing 2, the housing 2 still comprises a dead volume. This dead volume may contribute to enhanced air flow which may be used to cool the tool or device operated via the power adapter 1. So the cooling of the electronic components in the power adapter 1 and of the power tool 1 is improved.

In FIG 6 an embodiment of the whole system including a power tool 16 with a power adapter 1 and an external battery supply, here a backpack battery assembly 14, is shown. The power adapter 1 has an electrical cable 11 exiting from its cable outlet 9 which electrical cable 11 is electrically connected through an electrical connector 12, in particular a magnetic or a plug-socket-connector, to an electrical cable 13 of a backpack battery assembly 14 to be carried on the back of a user while the user holds the power tool 16 in his hands. The power adapter 1 is for illustration purposes not yet inserted into the power tool 16. Although the power adapter 1 has a cord or cable for connection to the batteries, the power tool 16 itself remains a cordless power tool. In particular the cable will be carried by the user and not fall on the ground, nor and more important will the length of the cables 11 and 13 restrict the range of the power tool 16 thus maintaining the mobility of a cordless battery powered power tool.

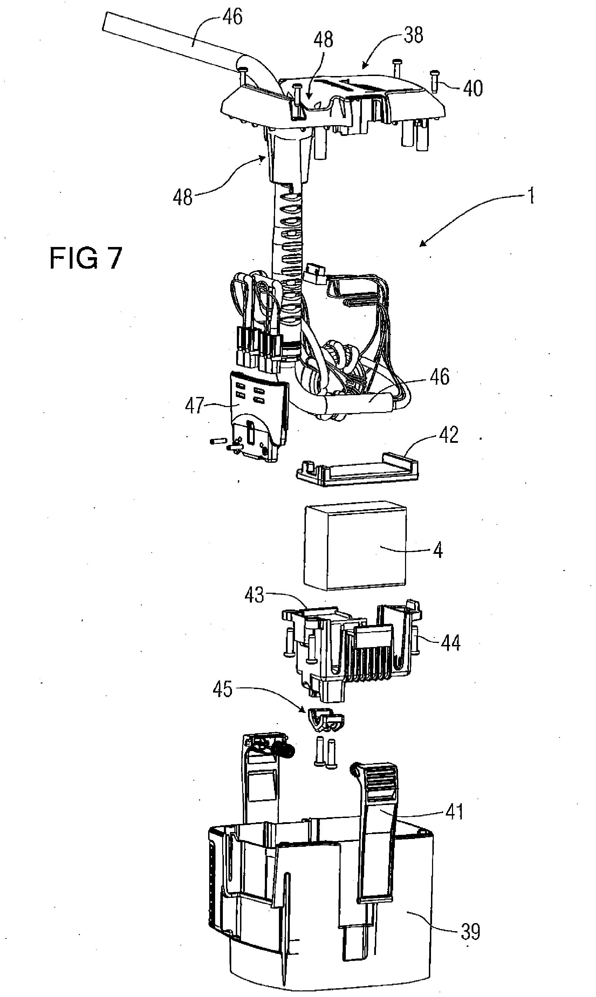

FIG. 7 shows an exploded view of a further embodiment of the power adapter 1 according to the invention. The power adapter 1 in this configuration comprises a base section 38 and a corresponding dome shaped cover 39. The base section 38 and cover 39 can be connected to each other, in the present case via screws 40, to establish a casing or housing adapted for accommodating elements or components of the power adapter 1.

Elements or components accommodated within the casing are as follows: a support plate 42 adapted for supporting a balancing weight 4 on the base section 38, and a retaining bracket 43 adapted for retaining and holding the balancing weight 4 on the base section 38. The bracket 43 at least partially embraces the balancing weight 4 and is adapted to be fixed to the base section 38, presently via further screws 44, optionally via shape-locking elements or connections and the like.

As can be seen from FIG. 7, the bracket 43 comprises on a side averted from the support plate 42 a cable clamp arrangement 45 adapted to tightly clamp cables such as for example a cable 46 for electric power supply.

The cable 46 is guided through the base section 38, through the inner of the casing and finally ends in a connector interface 47 adapted to establish electric contact and others to corresponding counter contacts of the cordless power tool.

As already becomes obvious from FIG. 7, the power adapter 1 in this configuration enables comparatively compact arrangements and designs of the elements arranged or accommodated within the casing. In particular beyond the balancing weight 4 and bracket 43 there is still room left for guiding cables, such as cable 46, and air ventilation through the casing.

As can also be seen from FIG. 7, the base section 38 comprises a cable bushing 48. The cable bushing 48 is implemented as a funnel shaped element extending from the base section 38 to the inner volume of the casing. As will become more obvious further below, the outer walls of the bushing 48 are designed to implement a funnel or cone having increasing cross sections in a direction from the inside of the casing towards its outside. Using such a funnel shaped cable bushing 48 has the advantage that the cable bending radii of the cable 46 can be kept at moderate values during operation or use of the power adapter 1. In particular too small bending radii probably causing cable damages may be avoided, at least at the cable bushing 48. Also, less space is needed to align the cable along the outside surface of the adapter or powertool.

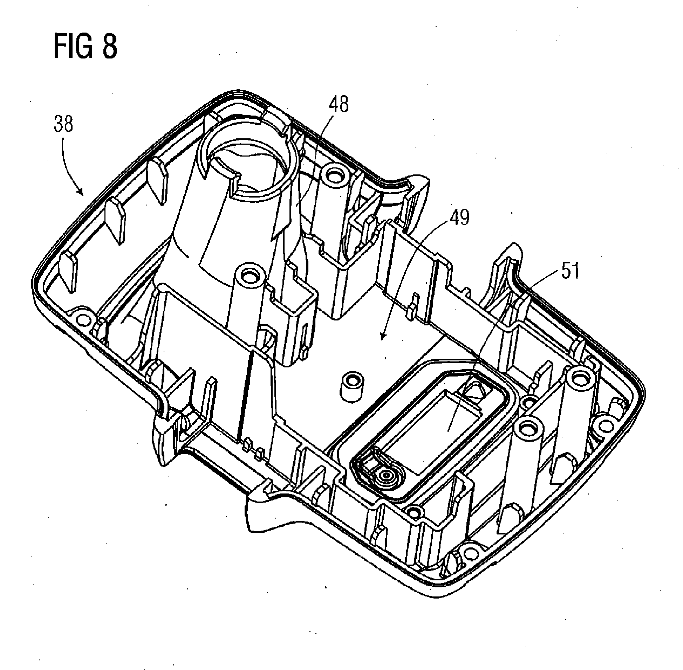

FIG. 8 shows the base section 38 of the power adapter 1 in more detail. The base section 38 has an essentially rectangular shape and provides several elements for fixing the cover 39, bracket 43 and others. Further, the base section 38 may comprise at its inner side several reinforcement elements or ribs. However, the base section 38 of the present embodiment comprises a recess 49 which is adapted to accommodate a printed circuit board, in particular in a press-locking, shape-locking and/or snap-locking manner. The PCB may also be fastened by means of screws for example. Several support elements for supporting the printed circuit board are arranged in the recess 49.

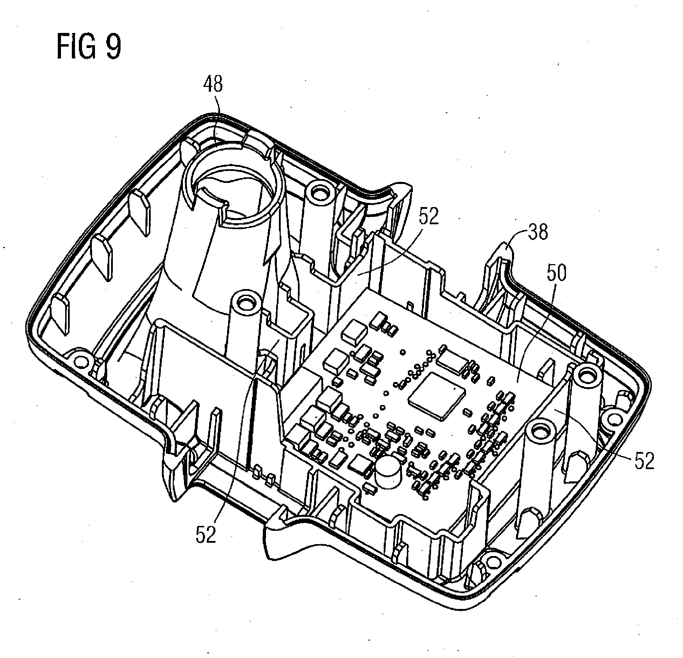

FIG. 9 shows the base section 38 with the printed circuit board arranged within the recess 49, wherein the printed circuit board is designated with reference number 50. Mounting the printed circuit board within the base section 38 has the advantage that it can be protected against outer mechanical impacts, as the base section 38 is of comparative robust construction. Further, display and/or operating elements 51 (FIG. 8) or signs related to the printed circuit board 50 may be viewed through the base section 38, which in general is visible even if the power adapter 1 is coupled to a cordless power tool.

As has been described in connection with FIG. 7, the balancing weight is also mounted or fixed to the base section 38. As becomes clear from a combination of FIG. 7 to FIG. 9, the location of the printed circuit board 50 in the base section 38 at least overlaps with the mounting location of the balancing weight 4. In order to avoid the balancing weight 4 to directly rest on the printed circuit board 50, the base section 38 comprises several support ribs 52 adjacent to the recess 49. The support ribs 52 are adapted and configured such that they can support the support plate 42, and in particular can engage corresponding grooves or notches or ribs provided with the support plate 42.

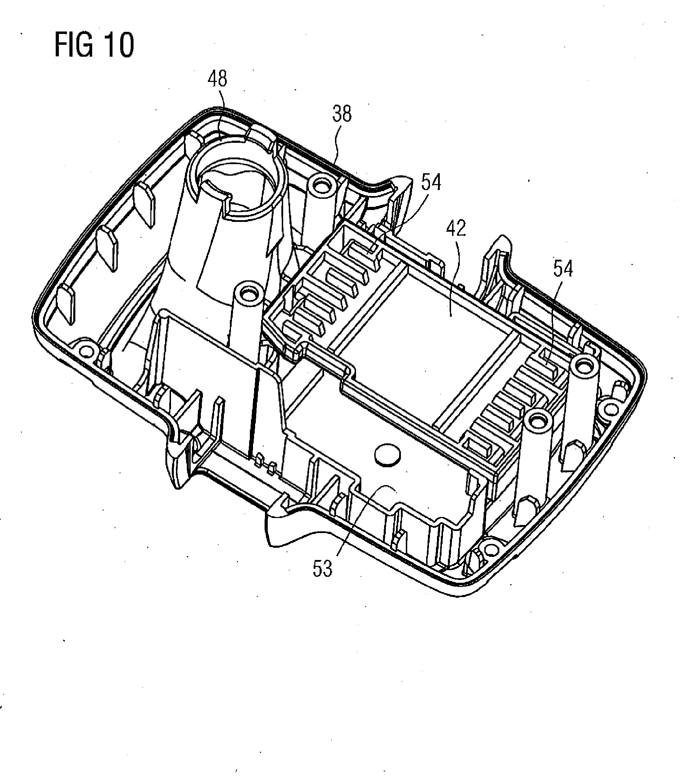

Reference is now made to FIG 10 showing the base section 38 together with the support plate 42 in a configuration suitable for supporting the balancing weight 4. It shall be noted, that the printed circuit board 50 is not visible in FIG. 10. This is due to the fact, that in the present embodiment, the recess 49 accommodating the printed circuit board 50 is potted or sealed with a potting or sealing compound 53, which is provided for protecting the printed circuit board 50 from outer influences.

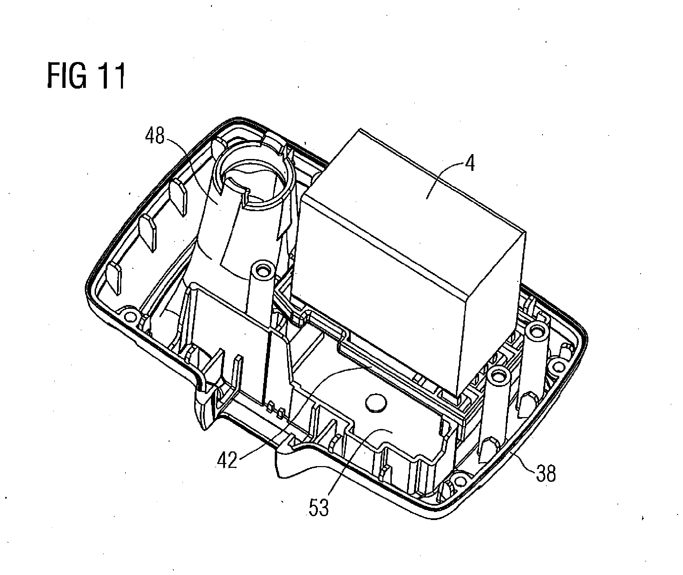

Further, the support plate 42 connected to the base section 38 comprises or provides support bars 54 adapted to support the balancing weight 4 placed on the support plate 42. A respective arrangement of the balancing weight 4 on the support plate 42 can be seen in FIG. 11. From FIG. 11 it can in particular be seen that the support plate 42 fully supports the load of the balancing weight 4 and thereby prevents the load of the balancing weight 4 from acting on the printed circuit board 50 and/or potting or sealing compound 53.

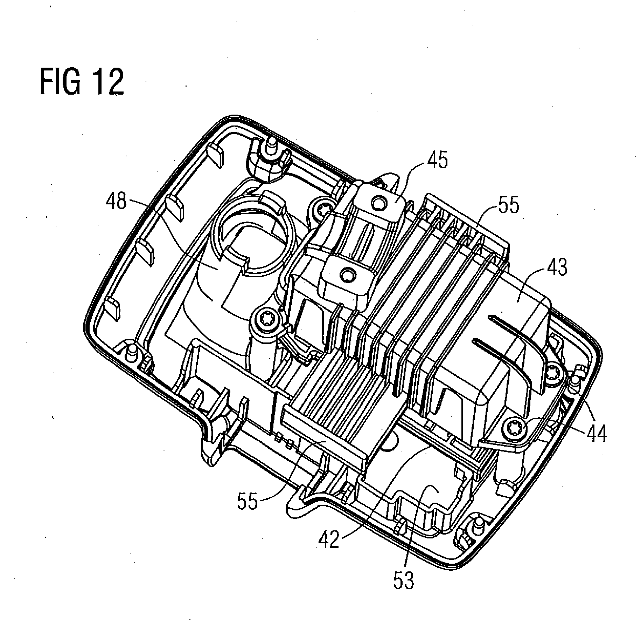

Reference is now made to FIG. 12 showing the balancing weight 4 attached or fixed to the base section 38 via the retaining bracket 43. The retaining bracket 43 in the present case is screw-mounted to the base section 38. Further, the retaining bracket 43 comprises stiffening elements, such as stiffening ribs, configured to firmly fix the balancing weight 4 to the base section 38 in particular in extreme situations, in particular in situations in which the power adapter crashes, unintentionally, to the ground and the like.

In FIG. 12 it can be seen that the retaining bracket 43 comprises at lateral sides, in the present case at two lateral sides averted from each other, a respective support jib 55. The support jibs 55 are designed such that the retaining bracket 43 is and will be supported against the inner walls of the cover 39 in case that the base section 38 and the cover 39 are connected to each other. The support jibs 55 may be effective in preventing cracking or rupturing the retaining bracket 43 and balancing weight 4 from the base section 38 under extreme loads, such for example occuring in instances where the power adapter, unintentionally, or in drop tests, crashes or is crashed to the ground.

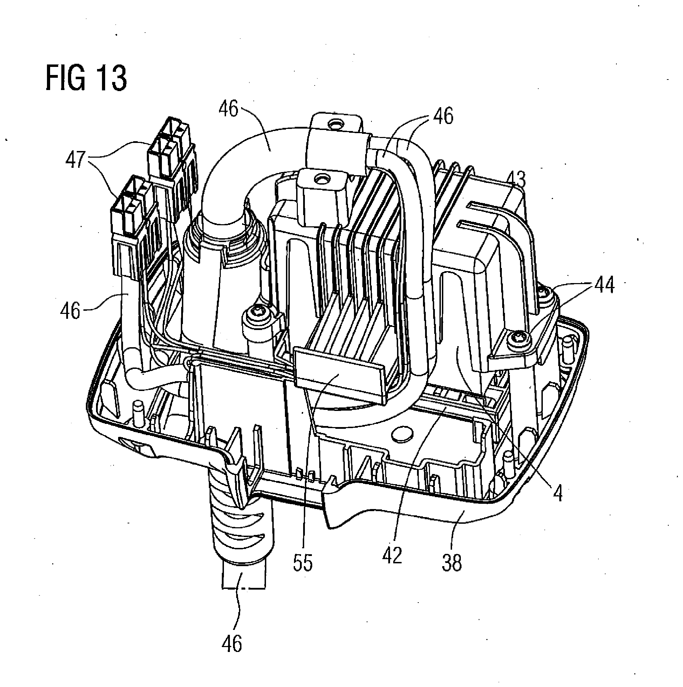

As can be seen in more detail from FIG. 13, the support jigs 55 can have a secondary function in which the support jigs 55 are used for cable routing, as a cable holder and/or a cable retainer for the cable 46 or cables or other elements within the casing which is assembled from the base section 38 and cover 39 connected thereto.

FIG. 13 further shows that there is still room left within the casing which in particular is advantageous for allowing an air flow through the casing, in particular for cooling respective components accommodated therein.

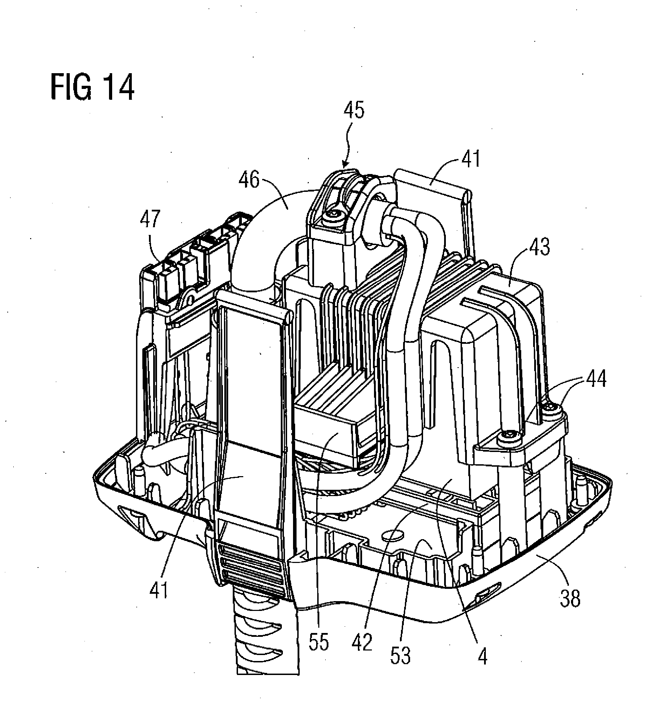

FIG. 14 shows the power adapter 1 in an advanced preassembled state in which the printed circuit board 50 is potted to the base section 38 and the balancing weight 4 is fixed to the base section 38 via the retaining bracket 43. Further, the cable 46 or parts thereof are fixed to respective retaining elements, in particular to the cable clamp arrangement 45 and support jib 55. The connector interface 47 is adequately mounted to the base section 38, and the snap locking elements 41 are connected to the base section 38.

In this state of assembly, the cover 39 can be imposed or put on the base section 38 and all elements assembled thereto, and the cover 39 can be fixed to the base section 38.

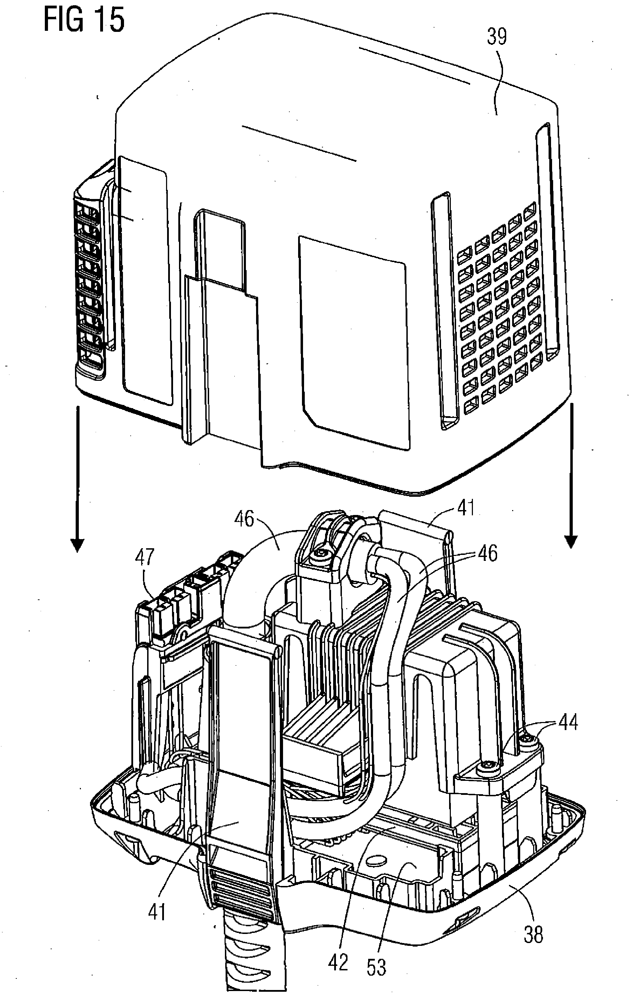

Here, it can in particular be seen that the proposed embodiment allows a great deal of preassembly work on the basis of the base section 38. In a final assembly step only the cover 39 may be connected, which in particular is indicated in FIG. 15 by arrows.

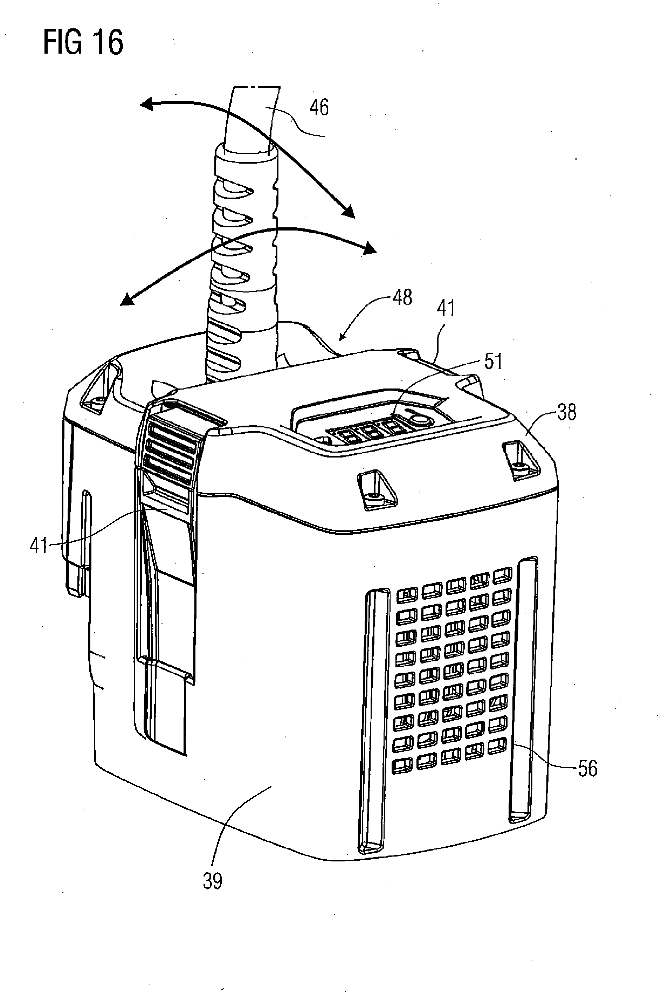

FIG. 16 shows the power adapter in the assembled state. From FIG. 16 it can be seen that the cover 39 comprises air vents 56 allowing a cooling airflow through the casing. Further, it can be seen that the display and/or operating element or unit 51 is freely accessible and visible even if the power adapter 1 should be connected to a power tool.

It can also be seen from FIG. 16, that the base section 38 may be screw mounted to the cover 39.

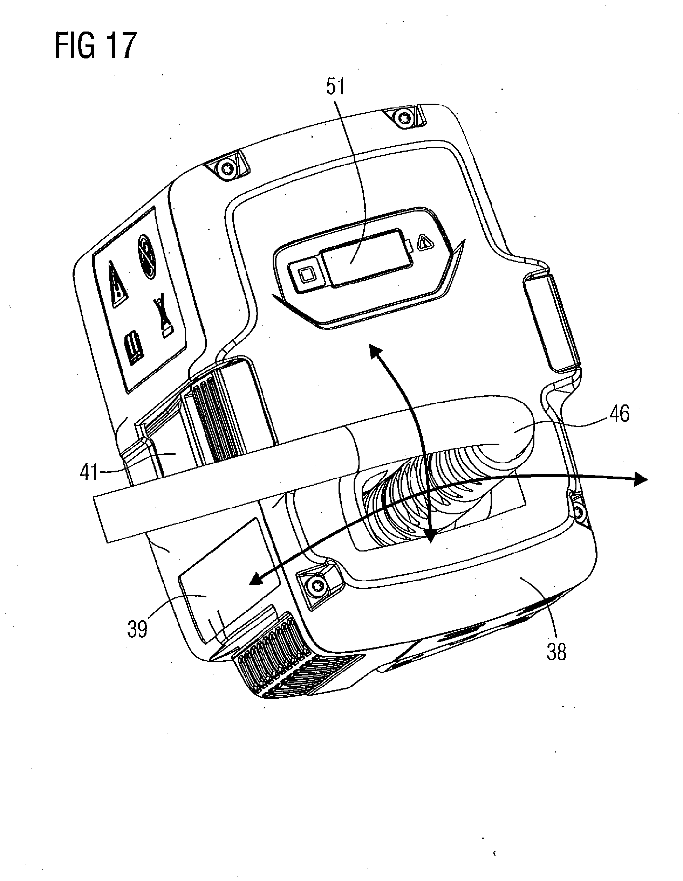

Reference is now made to FIG. 17 showing a different perspective view of the power adapter 1 in FIG. 16. As can be seen from a combination of FIG. 16 and FIG. 17, the cable bushing 48 is implemented as a funnel or cone shaped deepening providing convex outer walls for reducing or restricting the bending radii of the cable 46 during operation to moderate values. The bending radii in particular are selected such that damages to the cable 46 as a result of sharp bends at the cable bushing 48 can be avoided, and such that bending of the cable in a certain direction is facilitated.

As can be seen, the power adapter as proposed herein greatly improves operation of cordless tools, in particular cordless power tools, in cases in which comparatively heavy energy sources, i.e. battery pack with comparatively high load capacities are used.

### Reference signs:

- 1: power adapter
- 2: adapter housing
- 3: fixture unit
- 4: balance weight
- 5: fastening element
- 6: coupling interface
- 7: display unit
- 8: slewable cable outlet
- 9: outlet opening
- 10: air vent
- 11: electrical cable
- 12: electrical connector
- 13: electrical cable
- 14: backpack battery assembly
- 15: fastening elements
- 16: power tool
- 20: housing lid
- 31: first fixture sub-unit
- 32: second fixture sub unit
- 33: side wall
- 34: receiving space
- 35: receiving space
- 36: inner space
- 37: side wall
- 38: base section
- 39: cover
- 40: screw
- 41: snap locking element
- 42: support plate
- 43: retaining bracket
- 44: further screws
- 45: cable clamp arrangement
- 46: cable
- 47: connector interface
- 48: cable bushing
- 49: recess
- 50: printed circuit board
- 51: display and/or operating element
- 52: support rib
- 53: potting or sealing compound
- 54: support bar
- 55: support jib
- 56: air vent

## Claims

1. Energy source and power tool combination comprising
- a cordless hand-held power tool (16);
- a backpack battery assembly (14) specially adapted to be carried on the back of the user via at least one shoulder strap;
- a power adapter (1);
- an electrical cable (11, 13) interconnecting the backpack battery assembly (14) and the power adapter (1); wherein
the power adapter (1) is configured to be mounted in the power tool (16) and electrically coupled with a corresponding interface of the power tool (16) when the power adapter (1) is mounted in the power tool; the combination being **characterized by** that the power adapter (1) is adapted to be connected to a charging device for charging the backpack battery assembly (14), wherein the combination further comprises a rechargeable battery pack with the design and dimensions corresponding to a housing of the power adapter (1), wherein the power adapter (1) comprises a removable balance weight (4) providing the ordinary weight distribution of the rechargeable battery pack.

2. Combination according to claim 1, wherein the combination further comprises an electrical connector (12), such as a magnetic or a plug-socket-connector between the rechargeable battery pack (14) and the power adapter (1).

3. Combination according to claim 2, wherein the electrical connector (12) is configured to connect an electrical cable (9) of the power adapter (1) to an electrical cable (13) of the backpack battery assembly (14).

4. Combination according to any of the preceding claims, wherein the power adapter comprises a display unit (51) adapted to display a charging condition and/or other parameter of the energy source.

5. Combination according to any of the preceding claims, wherein a housing (2) of the power adapter (1) comprises air vents (10) allowing a flow of air through the housing (2) for cooling the power tool.

6. Combination according to any of the preceding claims, wherein the power tool (16) is a tool in a group consisting of hedge trimmers, clearing saws, chain saws, brush cutters, trimmers, and blowers.

## Patentansprüche

1. Kombination aus Energiequelle und Elektrowerkzeug, die Folgendes umfasst:
- ein schnurloses handgehaltenes Elektrowerkzeug (16) ;
- eine Rucksackbatterieanordnung (14), die speziell angepasst ist, um über mindestens einen Schultergurt auf dem Rücken des Benutzers getragen zu werden;
- einen Leistungsadapter (1);
- ein elektrisches Kabel (11, 13), das die Rucksackbatterieanordnung (14) und den Leistungsadapter (1) miteinander verbindet; wobei
der Leistungsadapter (1) dazu ausgelegt ist, in dem Elektrowerkzeug (16) montiert und elektrisch mit einer entsprechenden Schnittstelle des Elektrowerkzeugs (16) gekoppelt zu werden, wenn der Leistungsadapter (1) in dem Elektrowerkzeug montiert ist; wobei die Kombination **dadurch gekennzeichnet ist, dass**
der Leistungsadapter (1) dazu ausgelegt ist, mit einer Ladevorrichtung zum Laden der Rucksackbatterieanordnung (14) verbunden zu werden, wobei die Kombination ferner ein wiederaufladbares Batteriepack umfasst, wobei der Aufbau und die Abmessungen einem Gehäuse des Leistungsadapters (1) entsprechen, wobei der Leistungsadapter (1) ein entfernbares Ausgleichsgewicht (4) umfasst, das die gewöhnliche Gewichtsverteilung des wiederaufladbaren Batteriepacks bereitstellt.

2. Kombination nach Anspruch 1, wobei die Kombination ferner einen elektrischen Verbinder (12), wie etwa einen magnetischen oder einen Steckverbinder, zwischen dem wiederaufladbaren Batteriepack (14) und dem Leistungsadapter (1) umfasst.

3. Kombination nach Anspruch 2, wobei der elektrische Verbinder (12) dazu ausgelegt ist, ein elektrisches Kabel (9) des Leistungsadapters (1) mit einem elektrischen Kabel (13) der Rucksackbatterieanordnung (14) zu verbinden.

4. Kombination nach einem der vorhergehenden Ansprüche, wobei der Leistungsadapter eine Anzeigeeinheit (51) umfasst, die dazu ausgelegt ist, einen Ladezustand und/oder einen anderen Parameter der Energiequelle anzuzeigen.

5. Kombination nach einem der vorhergehenden Ansprüche, wobei ein Gehäuse (2) des Leistungsadapters (1) Luftauslässe (10) umfasst, die einen Luftstrom durch das Gehäuse (2) zum Kühlen des Elektrowerkzeugs ermöglichen.

6. Kombination nach einem der vorhergehenden Ansprüche, wobei das Elektrowerkzeug (16) ein Werkzeug in einer Gruppe ist, die aus Heckenschneidern, Räumsägen, Kettensägen, Gestrüppschneidern, Trimmern, und Gebläsen besteht.

## Revendications

1. Combinaison de source d'énergie et d'outil électrique comprenant
- un outil électrique portatif sans fil (16) ;
- en ensemble batterie sac à dos (14) adapté spécialement pour être porté sur le dos de l'utilisateur par l'intermédiaire d'au moins une bandoulière ;
- un adaptateur électrique (1) ;
- un câble électrique (11, 13) interconnectant l'ensemble batterie sac à dos (14) et l'adaptateur électrique (1) ; dans laquelle
l'adaptateur électrique (1) est configuré pour être monté dans l'outil électrique (16) et couplé électriquement avec une interface correspondante de l'outil électrique (16) lorsque l'adaptateur électrique (1) est monté dans l'outil électrique ; la combinaison étant **caractérisée en ce que**
l'adaptateur électrique (1) est adapté pour être connecté à un dispositif de charge pour charger l'ensemble batterie sac à dos (14), dans laquelle la combinaison comprend en outre un bloc-batterie rechargeable avec la conception et les dimensions correspondant à un boîtier de l'adaptateur électrique (1), dans laquelle l'adaptateur électrique (1) comprend un poids d'équilibrage amovible (4) fournissant la répartition de poids ordinaire du bloc-batterie rechargeable.

2. Combinaison selon la revendication 1, dans laquelle la combinaison comprend en outre un connecteur électrique (12), tel qu'un connecteur aimanté ou à contacts mâle et femelle entre le bloc-batterie rechargeable (14) et l'adaptateur électrique (1).

3. Combinaison selon la revendication 2, dans laquelle le connecteur électrique (12) est configuré pour connecter un câble électrique (9) de l'adaptateur électrique (1) à un câble électrique (13) de l'ensemble batterie sac à dos (14).

4. Combinaison selon l'une quelconque des revendications précédentes, dans laquelle l'adaptateur électrique comprend une unité d'affichage (51) adaptée pour afficher un état de charge et/ou un autre paramètre de la source d'énergie.

5. Combinaison selon l'une quelconque des revendications précédentes, dans laquelle un boîtier (2) de l'adaptateur électrique (1) comprend des évents (10) permettant un écoulement d'air à travers le boîtier (2) pour refroidir l'outil électrique.

6. Combinaison selon l'une quelconque des revendications précédentes, dans laquelle l'outil électrique (16) est un outil dans un groupe constitué de taille-haies, scies d'éclaircissage, tronçonneuses, débroussailleuses, coupe-bordures, et souffleuses.
